Europäisches Patentamt

European Patent Office

Office européen des brevets

(19)

(11) Publication number: **0 102 210**
**B1**

# EUROPEAN PATENT SPECIFICATION

(12)

(45) Date of publication of patent specification: **09.04.86**

(51) Int. Cl.⁴: **E 02 B 3/22**, B 63 B 59/02

(21) Application number: **83304606.3**

(22) Date of filing: **09.08.83**

(54) **Marine fender.**

(30) Priority: **12.08.82 JP 139192/82**

(43) Date of publication of application:
**07.03.84 Bulletin 84/10**

(45) Publication of the grant of the patent:
**09.04.86 Bulletin 86/15**

(84) Designated Contracting States:
**DE FR GB NL**

(56) References cited:
**FR-A-2 068 881**
**GB-A-2 084 693**
**US-A-3 418 816**

(73) Proprietor: **BRIDGESTONE TIRE COMPANY LIMITED**
**10-1, Kyobashi 1-Chome Chuo-Ku**
**Tokyo (JP)**

(72) Inventor: **Yamaguchi, Ikutoshi**
**1-27-104, Shimomachiya**
**Chigasaki City (JP)**
Inventor: **Kajigaya, Shinichi**
**7-26, Konan 1-Chome Konan-Ku**
**Yokohama City (JP)**

(74) Representative: **Whalley, Kevin et al**
**Marks & Clerk 57/60 Lincoln's Inn Fields**
**London WC2A 3LS (GB)**

Courier Press, Leamington Spa, England.

## Description

This invention rleates to a marine fender, in particular a marine fender which is provided with a shock receiving plate and which is, in use, attached to a quay wall or the like and used as a buffer structure in the berthing or mooring of vessels.

A marine fender of this type provided with a shock receiving plate is known from Japanese Patent Application Publication No. 49-6,352, and has a structure as shown in Fig. 1 of the accompanying drawings, which is an axial section of the conventional marine fender.

That is, the marine fender provided with the shock receiving plate (hereinafter referred to as a marine fender assembly) *a* is a hollow structural body comprising a base portion *b* secured to a quay wall B or the like and a shock receiving portion *d* provided at its outer surface with a shock receiving plate *c*. In this case, the shock receiving plate *c* is connected to the shock receiving portion *d* through anchoring means in the form of a plate body *e* such as an iron plate embedded in the shock receiving portion *d* over its whole area by means of connecting members *f*.

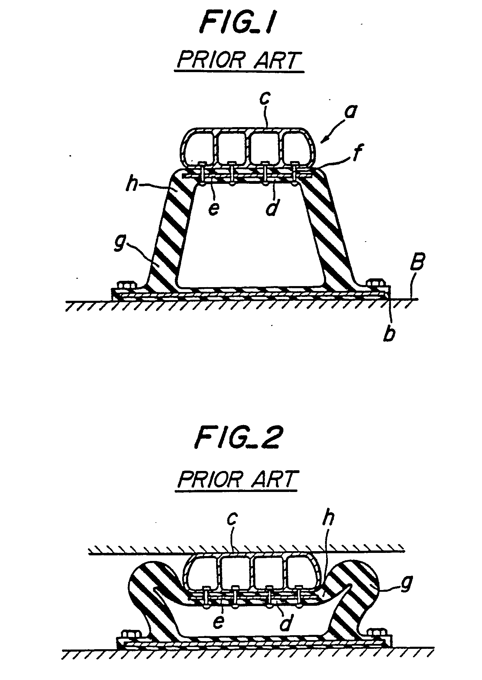

However, when the marine fender assembly *a* having the above mentioned structure is deformed by applying a berthing load thereto as shown in Fig. 2 of the accompanying drawings, which is a diagrammatic sectional view illustrating one deformation mode of the marine fender shown in Fig. 1, the shock receiving portion *d* hardly deforms owing to the presence of the plate body *e*, so that the deformation concentrates into both side edges of the shock receiving portion *d*, i.e. each top part *h* of a supporting portion *g*. Therefore the top portions *h* are apt to deteriorate by repetitive use, which adversely affects the durability of the marine fender.

It is, therefore, an object of the present invention to eliminate the aforementioned drawback of the prior art and to provide a marine fender of improved durability.

According to the invention, there is provided a marine fender comprising a shock receiving portion provided at its outer surface with a shock receiving plate, anchoring means embedded in the shock receiving portion and connected to the shock receiving plate by means of connecting members a supporting portion extending from the or each side edge of the shock receiving portion toward a supporting structure such as a quay wall or the like, and a flanged base portion protruding sidewards from the supporting portion, these portions being formed of a rubbery elastic material, wherein the anchoring means comprises at least one rod or rod-like member.

In the marine fender according to the invention, the or each rod or rod-like member is embedded in the shock receiving portion so as to fix the shock receiving plate, so that when the marine fender is subjected to a berthing load, the shock receiving portion is deformed together with the deformation of the supporting portion, so that stress concentration does not occur in the top part of the supporting portion and the durability of the marine fender is improved considerably. Furthermore, the deformation of the shock receiving portion as well as the supporting portion withstands the berthing load, so that the buffering performance of the marine fender is excellent.

The invention will be further described by way of example only, with reference to the accompanying drawings, wherein:

Fig. 3 is a partial perspective view of one embodiment of a marine fender according to the invention;

Fig. 4 is an axial sectional view of the marine fender shown in Fig. 3;

Fig. 5 is a diagrammatic sectional view illustrating one deformation mode of the marine fender shown in Fig. 4;

Fig. 6 is an axial sectional view of another embodiment of a marine fender according to the invention;

Fig. 7 is an axial elevation view, partly shown in section, of a further embodiment of a marine fender according to the invention; and

Fig. 8 is a diagrammatic view illustrating the deformation mode of the marine fender shown in Fig. 7.

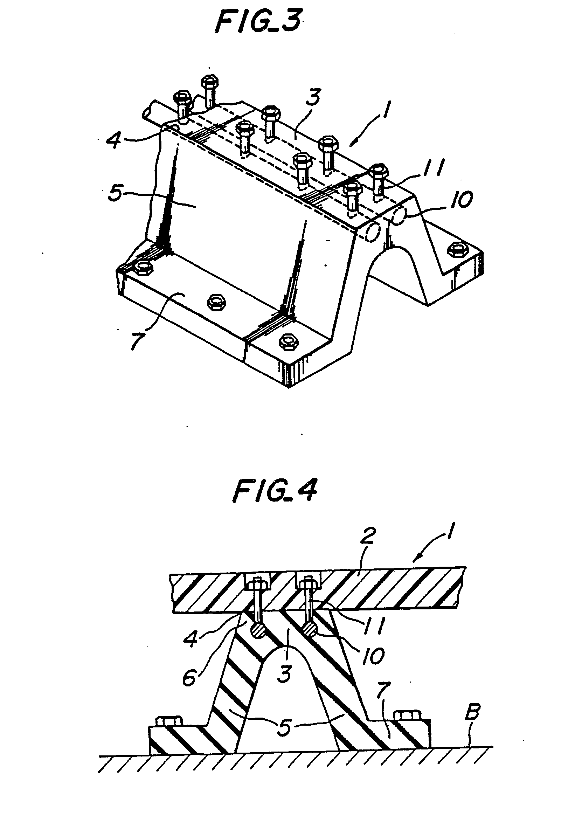

Figs. 3 to 5 show a marine fender 1 which comprises a fender body shaped as shown and made of an elastic material such as rubber, and a shock receiving plate 2 secured thereto. The fender body comprises a shock receiving portion 3, a supporting portion 5 extending divergently from each side edge 4 of the shock receiving portion 3 toward a quay wall B, a flanged base portion 7 protruding sidewards from the supporting portion 5, a pair of parallel rod members 10 longitudinally embedded in the shock receiving portion 3 along both side edges 4 thereof, and a plurality of connecting members 11 such as bolts studded on each of the rod members 10 at a suitable pitch and protruding upward from the outer surface of the shock receiving portion 3. Moreover, each rod or rod-like member 10 is sufficiently durable in the attaching of the connecting members 11, that it is made from a metal such as steel or other material having high strength and rigidity and may have any sectional shape such as circular, square, L-shaped, ]-shaped, or a hollow shape.

The shock receiving plate 2 is secured to the shock receiving portion 3 through the connecting members 11 (see Figs. 3 and 4).

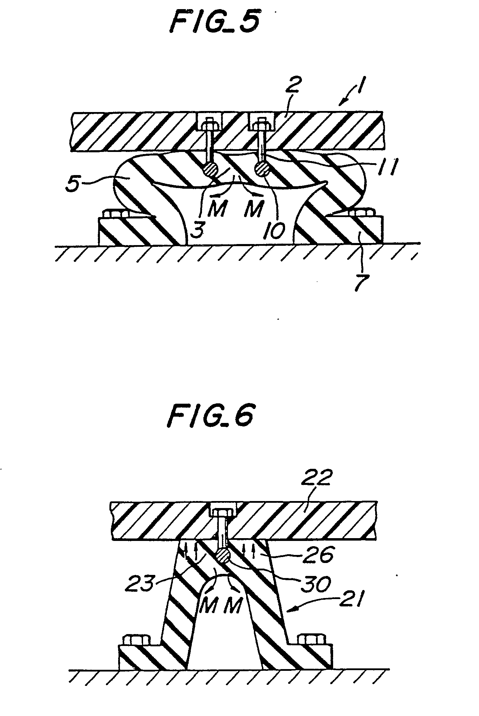

When a berthing load is applied to the shock receiving plate 2 of the marine fender 1 having the above mentioned structure, each of the supporting portions 5 is deformed outwardly in two fold parts as shown in Fig. 5, and at the same time a downward bending moment M acts on the shock receiving portion 3 as shown in Fig. 5. Since the shock receiving portion is not restrained unlike the conventional marine fender *a* shown in Figs. 1 and 2, it deforms freely. Therefore, stress concentration does not occur in the top parts 6 of the supporting portions 5, but the stress is produced evenly in the shock receiving portion 3. In other words, the berthing load can be mitigated by the supporting portions 5 and the shock receiving portion 3 as a whole. Furthermore, the bearing of a load by the top parts 6 is reduced, so that deterioration due to fatigue is less and the durability is improved considerably.

In the production of the marine fender body, the mutual distance between the rod members 10 can be maintained by connecting these rod members 10 to each other through a plurality of fine wire bodies. In this case, it is necessary to use a wire material capable of accepting the deformation of the shock receiving portion 3.

Further, ridges such as so-called bamboo joints may be formed on the rod members 10 to improve their integral structure with the elastic material of the marine fender 1.

Each rod member 10 may be obtained by dividing a single continuous rod into a plurality of parts, or may be a continuous rod.

In another embodiment of the invention as shown in Fig. 6, a rod member 30 is embedded in a shock receiving portion 23 of a marine fender 21 at its widthwise centre, so that, when subjected to a berthing load, a bending moment M acts on the shock receiving portion 23 to enlarge the lower part of the shock receiving portion 23 at its centre and at the same time a top part 26 is urged by the shock receiving plate 22 to suffer compression deformation. Therefore, the marine fender 21 undergoes no forced stress concentration, has improved durability and has an excellent buffering performance.

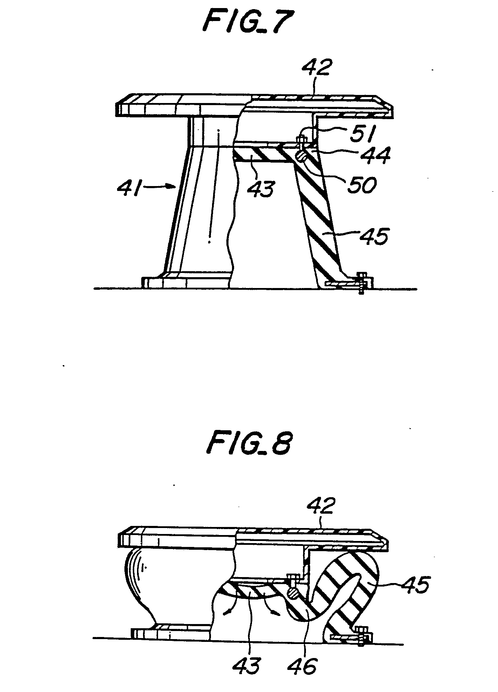

In a further embodiment of the invention as shown in Fig. 7, a marine fender 41 comprises a frusto-conical hollow body, and an annular ring 50 is embedded as a rod member in a shock receiving portion 43 of the fender body along its side edge 44, and a shock receiving plate 42 is secured to the shock receiving portion 43 through connecting members 51 protruding from the ring 50. When the marine fender 41 is subjected to a berthing load, a supporting portion 45 is bent into two fold parts and at the same time the central part of the shock receiving portion 43 is deformed downward as shown in Fig. 8. As a result, stress is dispersed over the whole of the marine fender 41 to develop an excellent buffering performance.

Moreover, a pair of two marine fenders used in each of the above embodiments may be used together as a two-step type marine fender by uniting the opposed shock receiving plates with each other, securing one of the base portions to a quay well and attaching a new shock receiving plate to the other base portion.

According to the invention, at least one rod or rod-like member is embedded in the shock receiving portion of the marine fender instead of the usually used plate body, so that the deformation of the shock receiving portion is not restrained due to the bending moment produced in the shock receiving portion and also stress concentration does not occur in the top part of the supporting portion. In the marine fender according to the invention, therefore, the berthing load can be buffered by the whole of the marine fender to develop an excellent buffering performance and at the same time the durability can be improved considerably.

**Claims**

1. A marine fender comprising a shock receiving portion (3) provided at its outer surface with a shock receiving plate (2), anchoring means (10) embedded in the shock receiving portion and connected to the shock receiving plate by means of connecting member (11), a supporting portion (5) extending from the or each side edge (4) of the shock receiving portion toward a supporting structure (B), and a flanged base portion (7) protruding sidewards from the supporting portion, the said portions (3, 5, 7) being formed of a rubbery elastic material, characterized in that said anchoring means comprises at least one rod or rod-like member (10).

2. A marine fender as claimed in claim 1, characterized in that a pair of parallel rod members (10) extend along each of a pair of side edges (4) of the shock receiving portion (3).

3. A marine fender as claimed in claim 1, characterized in that a single rod member (30) extends along the central part of the shock receiving portion (23).

4. A marine fender as claimed in claim 1, characterized in that the fender body is a hollow frusto-conical body and in that an annular rod member (50) is embedded in the shock receiving portion (43) along its side edge (44).

5. A marine fender as claimed in claim 1, characterized in that said rod member is an annular ring (50).

6. A marine fender as claimed in claim 1, characterized in that said rod or rod-like member (10) has a sectional shape which is circular, square, L-shaped, ]-shaped or a hollow shape.

**Patentansprüche**

1. Fender aus einem Stoß-aufnehmenden Teil (3), welcher an der Außenfläche eine Stoß-aufnehmende Platte (2) aufweist, Verankerungen, 10 eingebettet in den Stoß-aufnehmenden Teil, und verbunden mit der Stoß-aufnehmende Platte über Verbindungsglieder (11), einem Tragteil (5), welcher von der oder jeder Seitenkante(n) (4) des Stoßaufnehmenden Teils sich gegen eine Tragkonstruktion (B) erstreckt, und einem Bodenflänge (7), der sich von dem Tragteil seitlich erstreckt, und die Teile (3), (5) und (7) aus Gummi-elastischen Material bestehen, dadurch gekennzeichnet, daß die Verankerung zumindest ein Zapfenglied oder Zapfenartiges Glied (10) umfasst.

2. Fender nach Anspruch 1, dadurch gekennzeichnet, daß zwei paralelle Zapfen (10) vorgesehen sind, die sich jeweils über zwei Seitenkanten (4) des Stoß-aufnehmenden Teils (3) erstrecken.

3. Fender nach Anspruch 1, dadurch gekennzeichnet, daß ein einziger Zapfen (30) sich über den Mittenteil des Stoß-aufnehmenden Teils (23) erstreckt.

4. Fender nach Anspruch 1, dadurch gekennzeichnet, daß der Körper des Fenders ein hohler Kegelstumpf ist und daß ein ringförmiger Zapfen (50) in dem Stoß-aufnehmenden Teil (43) entlang der Seitenkante (44) eingebettet ist.

5. Fender nach Anspruch 1, dadurch gekennzeichnet, daß der Zapfen ein ringförmiger Zapfen (50) ist.

6. Fender nach Anspruch 1, dadurch gekennzeichnet, daß der Zapfen oder das Zapfenartige Teil (10) eine kreisrunde, quadratische, L-förmige, I-förmige Querschnittsfläche oder ein Hohlform besitzt.

## Revendications

1. Défense marine comprenant une partie de réception de chocs (3) munie, sur sa surface extérieure, d'une plaque de réception de chocs (3), de moyens d'ancrage (10) noyés dans la partie de réception de chos et reliés à la plaque de réception de chocs au moyen d'éléments de raccordement (11), une partie de support (5) s'étendant du ou de chaque bord latéral (4) de la partie de réception de choc vers une structure de support (B), et une partie de base formant rebord (7) saillant latéralement sur la partie de support, lesdites parties (3, 5, 7) étant réalisées en un matériau élastique caoutchouteux, caractérisé en ce que lesdits moyens d'ancrage comprennent au moins une tige ou un organe semblable à une tige (10).

2. Défense marine selon la revendication 1, caractérisée en ce que deux tiges parallèles (10) longent chacun de deux bords latéraux (4) de la partie de réception de choc (3).

3. Défense marine selon la revendication 1, caractérisée en ce qu'une seule tige (30) longe la partie médiane de la partie de réception de chocs (23).

4. Défense marine selon la revendication 1, caractérisée en ce que le corps de défense est un corps tronconique creux et en ce qu'une tige annulaire (50) est noyée dans la partie de réception de chocs (43) le long de son bord latéral (44).

5. Défense marine selon la revendication 1, caractérisée en ce que ladite tige est une bague annulaire (50).

6. Défense marine selon la revendication 1, caractérisée en ce que ladite tige ou ledit organe semblable à une tige (10) a une section de forme circulaire, carrée, en L, en ] ou creuse.

0 102 210

## FIG.1
### PRIOR ART

## FIG.2
### PRIOR ART

## FIG.3

## FIG.4

## FIG. 5

## FIG. 6

## FIG_7

## FIG_8